# EUROPEAN PATENT APPLICATION

(11) **EP 3 042 824 A1**
(43) Date of publication of application: **13.07.2016**
(21) Application number: 15150452.9
(22) Date of filing: 08.01.2015
(51) Int. Cl.: B61L 25/02, G01S 13/92

(54) **A system and a method for determining the travel speed of a rail vehicle**

(71) Applicant: Bombardier Transportation GmbH, 10785 Berlin (DE)
(72) Inventor: Rehn, Anders, 18156 Lidingö (SE)
(74) Representative: Patentanwälte Bressel und Partner mbB

(57) **Abstract**

The invention relates to a system and a method for determining a travel speed of a rail vehicle (1), wherein the system comprises a trackside control unit, a trackside modem unit for generating a transmission signal (TS) and at least one trackside transceiver element, wherein a data signal is generable by the trackside control unit and transmittable to the trackside modem unit, wherein the transmission signal (TS) is generable by the trackside modem unit based on the data signal and transmittable to the at least one trackside transceiver element, wherein the system further comprises at least one trackside receiver element (12) for receiving a vehicle-reflected signal, wherein the system further comprises at least one trackside evaluation unit (13) for determining the travel speed depending on at least one signal characteristic of the transmitted signal and at least one signal characteristic of the received vehicle-reflected signal.

## Description

The invention relates to a system and method for determining a travel speed of a rail vehicle.

An essential requirement for the operation of a rail vehicle is the accurate and reliable determination of the travel speed. Said determination is important for an operational safety, e.g. for avoiding a derailment of the train or avoiding a passage of stop signals. Further, the determination of the travel speed is important for keeping the travel times of the train to a desired timetable.

A common solution for the determination of said travel speed is to use vehicle-based speed determination systems, e.g. a speedometer. Also known are ground-based speed determination systems, wherein an exemplary ground-based system is described in US 6,091,355 A. Such ground-based systems can be used for calibrating a vehicle based speed determination system or to control a means of minimizing a time that road traffic needs to wait at a level crossing by calculating the time until the train arrives at the crossing or for gathering information about train drivers who are speeding and need to be reprimanded. Also, e.g. in case of a train accident, data provided by ground-based speed determination systems can be used for analyzing the accident.

Further known is the so called Euroloop Technology. The Euroloop Technology is part of the European Rail Traffic Management System (ERTMS) and is described in the document "ERTMS/ETCS, FFFIS for Euro-Loop, REF: Subset-044, Issue: 4.0 dated: 2012-02-29, available under http://www.era.europa.eu/Document-Register/Documents/Set-2-Index016-SUBSET-044%20v240.pdf".

The document describes that train control information can be transmitted to the train either by a controlled or a fixed Eurobalise. So-called in-fill information may be provided by the Eurobalise-System, by the Euroloop, or by the radio in-fill system. The Euroloop Subsystem (ELS) provides signaling in-fill information in advance as regard to the next main signal in the train running direction as soon as they become available. Thus, the ELS provides a track-to-train communication system. Further describes is that the ELS is a semi-continuous, intermittent transmission system. It transmits in-fill information from the track side infrastructure to a train (up-link) at stand still or movement along a section of the track. It uses a so called leaky-cable as a trackside transmission antenna. The Euroloop system further comprises on-board equipment and one or several track side subsystems. The transmission of data between the trackside equipment and the on-board equipment of the ELS can be performed by using a combination of (a) magnetic coupling in the air gap and (b) direct sequence spread spectrum (DSSS) modulation of the RF-carrier signal, wherein the RF-carrier signal is injected into the aforementioned leaky-cable in order to generate a magnetic field in the air gap.

There is the technical problem of providing a ground-based speed determination system and method which allows a robust and accurate determination of the travel speed of a rail vehicle while minimizing a required additional installation effort.

The solution to said problem is provided by the subject-matter of claim 1 and 9. Further embodiments of the invention are provided by the subject-matter of the subclaims.

A system for determining the travel speed of a rail vehicle is proposed. The system can be a track-sided or a ground-based system. The rail vehicle can travel on a rail track with the travel speed.

The system comprises a trackside control unit. In particular, the trackside control unit can be a lineside electronic unit (LEU) of the aforementioned ERTMS/ETCS, in particular the LEU of the ELS. The LEU can be connected by a data or signal connection to a so-called interlocking unit.

Further, the system comprises a track side modem unit for generating a transmission signal. The trackside modem unit can be a modem unit of the ELS. In particular, the trackside modem unit can be a so-called loop modem (LOOMO), wherein the LOOMO denotes a signal generating part of the trackside equipment of the ELS. As described in "ERTMS/ETCS, FFFIS for Euro-Loop, REF: Subset-044, Issue: 4.0 dated: 2012-02-29, available under http://www.era.europa.eu/Document-Register/Documents/Set-2-Index016-SUBSET-044%20v240.pdf", the track side modem unit can be operable in two operating modes, namely an active (transmitting) mode and a stand-by (non-transmitting) mode. The transition between these modes is also described in the "ERTMS/ETCS, FFFIS for Euro-Loop, REF: Subset-044, Issue: 4.0 dated: 2012-02-29, available under http://www.era.europa.eu/Document-Register/Documents/Set-2-Index016-SUBSET-044%20v240.pdf" which is hereby fully incorporated by reference.

Further, the system comprises at least one trackside transceiver element. The trackside transceiver element denotes an element for transmitting a signal from the trackside to the vehicle side. In particular, the trackside transceiver element can be provided by a trackside antenna element or antenna structure. More particular, the trackside transceiver element can be provided or is a leaky-cable, preferably the so-called Euroloop leaky-cable (ELC) of the ELS. The trackside transceiver element can be used to generate a magnetic radio frequency field that shall be picked-up or received by a vehicle-sided receiving element, e.g. a vehicle-sided antenna element. The trackside transceiver element can extend along a track with a predetermined length. The trackside transceiver element can be attached to one rail of a set of two rails.

Thus, the trackside transceiver element, in particular, the aforementioned ELC, can extend in a direction parallel to a travelling direction of the rail vehicle along the track.

It is possible that the components of the ELS can be components of a single ELS or a double ELS or a parallel ELS.

A data signal is generable, i.e. can be generated, by the trackside control unit. In particular, the data signal can be generated depending on a signal generated by the aforementioned interlocking unit which is then transmitted to the trackside control unit. Further, the data signal is transmittable to the trackside modem unit. The trackside control unit and the trackside modem unit can e.g. be connected via or by at least one transmission line. In this case, the trackside control unit and the trackside modem unit can comprise corresponding interfaces. The data signal can be generated in the form of a data telegram, in particular the so called Euroloop telegram. The structure of such a Euroloop telegram is described in the "ERTMS/ETCS, FFFIS for Euro-Loop, REF: Subset-044, Issue: 4.0 dated: 2012-02-29, available under http://www.era.europa.eu/Document-Register/Documents/Set-2-Index016-SUBSET-044%20v240.pdf". The data signal can be provided in form of a binary data stream.

Further, a transmission signal is generable by the trackside modem unit based on the data signal and transmittable, i.e. can be transmitted, to the at least one trackside transceiver element. In this case, the transmission signal can also be referred to as an excitation signal for the trackside transceiver element. The transmission signal can e.g. be provided in the form of an alternating current (AC) voltage signal. The trackside modem unit can be connected to the trackside transceiver element by a jumper cable. Further, the trackside modem can generate the transmission signal based on the data signal by modulating the data signal onto a carrier signal with predetermined signal characteristics, e.g. a predetermined center frequency. For instance, the transmission signal can be generated by using a DSSS modulation scheme. Details of such a generation are provided in "ERTMS/ETCS, FFFIS for Euro-Loop, REF: Subset-044, Issue: 4.0 dated: 2012-02-29, available under http://www.era.europa.eu/Document-Register/Documents/Set-2-Index016-SUBSET-044%20v240.pdf". The center frequency can be a frequency of 13.54750MHz.

As a result, the trackside transceiver element can generate an alternating electromagnetic field, which propagates along the transmission line and is transmitted into an air gap between the track and the vehicle and receivable by a vehicle-sided antenna element, e.g. of a vehicle-sided antenna unit. In other words, the trackside transceiver element can generate a transmitted signal.

According to the invention, the system further comprises at least one trackside receiver element for receiving a vehicle-reflected signal. The trackside receiver element can e.g. be provided by another antenna element, which can also be referred to as receiving antenna element. The vehicle-reflected signal can denote a part or portion of the electromagnetic field or transmitted signal which is reflected by the rail vehicle.

The system further comprises at least one trackside evaluation unit for determining the travel speed depending on at least one signal characteristic of the transmitted signal and at least one signal characteristic of a received vehicle-reflected signal. The evaluation unit can e.g. determine the at least one signal characteristic of the transmitted signal and the received vehicle-reflected signal, respectively. In particular, the evaluation unit can determine the travel speed based on the Doppler effect occurring between the transmitted signal and the vehicle-reflected signal. In this case, the signal characteristic can be a frequency of the respective signal. Further, the evaluation unit can generate an output signal which represents or encodes the travel speed. In summary, the transmission signal which is e.g. used in the ELS is not only used for transmitting data or information form the trackside to the vehicle side, but also for determining a travel speed of the rail vehicle. This advantageously allows providing a trackside or ground-based system for determining a travel speed by using existing components, in particular of the ELS. Thus, a precise and reliable determination of the travel speed is possible while an installation effort and installation costs are minimized.

In a preferred embodiment, the at least one receiver element is integrated into the trackside modem unit, in particular into the aforementioned LOOMO. For example, the at least one receiver element can be integrated into a housing of the trackside modem unit.

It is possible to attach the at least one receiver element to a housing, in particular to side walls of the housing of the trackside modem unit. In this case, the trackside receiver element can be arranged outside an inner volume of the housing.

It is, however, also possible to arrange the trackside receiver element spatially separated from the trackside modem unit, in particular spatially separated from the housing of the trackside modem unit and to provide at least one signal connecting means between the trackside receiver element and the trackside modem unit.

Integrating the receiver element into the trackside modem unit advantageously minimizes a required effort for retrofitting an existing ELS or of manufacturing a proposed system.

In another embodiment, the at least one evaluation unit is integrated into the trackside modem unit, in particular into the aforementioned LOOMO. For example, the at least one evaluation unit can be integrated into a housing of the trackside modem unit. It is possible to attach the at least one evaluation unit to a housing, in particular to side walls of the housing of the trackside modem unit. In this case, the evaluation unit can be arranged outside an inner volume of the housing.

It is, however, also possible to arrange the evaluation unit spatially separated from the trackside modem unit, in particular spatially separated from the housing of the trackside modem unit and to provide at least one signal connecting means between the evaluation unit and the trackside modem unit.

Of course, the evaluation unit is connected to the trackside receiver element by at least one signal connecting means. This means that a signal generated by the trackside receiver element upon reception of the vehicle-reflected signal can be provided or transmitted to the evaluation unit. It is, of course, possible to provide at least one filtering means or any other signal processing means in order to filter or process the signal generated by the receiver element. This further simplifies retrofitting of an existing ELS or a manufacturing of the proposed system.

In another embodiment, a signal transmission means for transmitting signals between the trackside control unit and the trackside modem unit comprises at least a first transmission element for transmitting the data signal from the trackside control unit to the trackside modem unit. The signal transmission means for transmitting signals between the trackside control unit and the trackside modem unit can e.g. be provided by the aforementioned at least one transmission line or multiple transmission lines. The type of transmission means determines a possible distance between the trackside control unit and the trackside modem unit.

Further, the signal transmission means comprises at least one additional transmission element for transmitting a speed signal from the trackside modem unit to the trackside control unit. The speed signal can denote an output signal of the evaluation unit which represents or encodes the travel speed of the rail vehicle.

In this case, the evaluation unit can be part of or integrated into the trackside modem unit. In comparison to an existing ELS, the additional transmission element provides an extension of the existing transmission means between the trackside control unit and the trackside modem unit.

Further, the trackside control unit and the trackside modem unit can comprise an additional interface for receiving/transmitting the speed signal. The additional interface can be an extension of an existing interface of the aforementioned units.

This advantageously reduces an interference between the additional speed signal and the existing data signal if an existing ELS is extended or retrofitted in order to provide a system for the determination of the travel speed.

In a preferred embodiment, the travel speed is determined depending on a frequency shift between the frequency of at least one data portion of the transmitted signal and the frequency of at least one data portion of the reflected signal and/or a phase shift between the at least one data portion of the transmitted signal and the at least one data portion of the reflected signal. The data portion of the reflected signal can be a data portion which corresponds to the data portion of the transmitted signal.

The data portion of the transmitted signal can denote the signal portion which is modulated onto the carrier signal and which encodes or represents the data which shall be transmitted to the vehicle. The data portion can also be referred to as data component.

The vehicle will reflect the carrier signal portion as well as the data signal portion. Depending on the travel speed, the frequency/frequencies of the reflected transmission signal, in particular of the carrier signal portion and the data signal portion, is/are changed.

In this embodiment, the evaluation unit can comprise at least one means for determining the data portion within the vehicle-reflected signal and its frequency, e.g. at least one filtering element. This advantageously allows reliable speed determination.

In another embodiment, the transmission signal is generable such that the transmission signal comprises at least a data portion and a speed determination portion, wherein a frequency of the data portion differs from the frequency of the speed determination portion or wherein a frequency range of frequencies of the data portion differs from a frequency range of the frequencies of the speed determination portion. The choice of frequencies depends on the expected quality of the reflected signal. It is, however, possible that the range of the frequencies of the data portion and the frequency of the speed determination portion overlap. The speed determination portion can be provided by speed determination signal, which can e.g. be modulated onto the carrier signal or the data signal.

Further, the frequency of the speed determination portion can differ from the frequency of the carrier signal portion or the frequency range of the frequencies of the speed determination portion can differ from the frequency range of frequencies of the signal carrier portion.

The travel speed can then be determined depending on a frequency shift between the frequency of the speed determination portion of the transmitted signal and the frequency of at least one speed determination portion of the vehicle-reflected signal.

This advantageously allows using a selected frequency or selected frequencies for the determination of the travel speed, wherein the selected frequency/frequencies increase the preciseness and reliability of the travel speed determination.

In another embodiment, the travel speed is determined depending on a frequency shift between the frequency of the speed determination portion of the transmitted signal and the frequency of the speed determination portion of the vehicle-reflected signal. This has been explained previously. Alternatively or in addition, the travel speed is determined depending on a phase shift between the speed determination portion of the transmitted signal and the speed determination portion of the vehicle-reflected signal.

In another embodiment, the frequency range of the speed determination portion, in particular of the speed determination signal, is adapted to signal transmission characteristics of the trackside transceiver element. In particular, the frequency range can comprise all frequencies of signals which are suitable for being transmitted by the trackside transceiver element, e.g. which are suitable for wave propagation along the trackside transceiver element provided by the ELC.

For example, the frequency range can range from 0.3 GHz (inclusive) to 3.0 GHz (inclusive). In this case, the speed determination portion is provided by a UHF-signal.

This advantageously allows a reliable determination of the frequency and/or phase shift and thus reliable and precise determination of the travel speed.

Further proposed is a method for determining a travel speed of a rail vehicle. A trackside control unit generates a data signal and transmits the data signal to trackside modem unit. In particular, the trackside control unit can generate the data signal depending on a signal generated by the aforementioned interlocking unit. The data signal can be transmitted to trackside modem unit via the aforementioned at least one transmission means. Further, the trackside modem unit generates a transmission signal based on the data signal and transmits the transmission signal to at least one trackside transceiver element. The trackside transceiver element generates a transmitted signal based on the transmission signal.

The trackside control unit, the trackside modem unit and the at least one trackside transceiver element have been described previously.

According to the invention, a vehicle-reflected signal is received by at least one trackside receiver element, wherein the travel speed is determined depending on at least one signal characteristic of the transmitted signal and at least one signal characteristic of the received vehicle-reflected signal by at least one trackside evaluation unit.

The vehicle-reflected signal can denote a portion of the transmitted signal which is reflected by the vehicle, in particular by a bottom side of the vehicle.

The proposed method can be performed by a system according to one of the previously described embodiments. Thus, the proposed system can be designed such that a method according to one of the described embodiments can be performed.

In another embodiment, the data signal is transmitted from the trackside control unit to the trackside modem unit by at least a first transmission element of at least one transmission means. A speed signal is transmitted from the trackside modem unit to the trackside control unit by at least one additional transmission element of the transmission means. This advantageously allows reducing a risk of interference between the data signal and the speed signal.

The speed signal can be received by the trackside control unit. It can be used to e.g. control trackside equipment, e.g. signaling means for the rail vehicle or for other vehicles crossing the rail track. Also, the speed signal can be stored, e.g. in a corresponding data storage unit.

In another embodiment, the travel speed is determined depending on a frequency shift between the frequency of at least one data portion of the transmitted signal and the frequency of at least one data portion of the vehicle-reflected signal. Alternatively or in addition, the travel speed is determined depending on a phase shift between the data portion of the transmitted signal and the data portion of the vehicle-reflected signal. This has been explained previously.

In another embodiment, the transmission signal is generated such that the transmission signal comprises a data portion and speed determination, in particular in addition to the carrier signal portion. Further, a frequency of the data portion differs from the frequency of the speed determination portion or frequency range of the frequencies of the data portion differs from a frequency range of the frequencies of the speed determination portion. Further, the frequency of the speed determination portion can differ from the frequency of the signal carrier portion for the frequency range of the frequencies of the data portion differs from the frequency range of frequencies of the signal carrier portion or the frequency range of the frequencies of the data portion differs from the frequency range of frequencies of the signal carrier portion.

This advantageously allows using a determination signal or speed determination signal portion with the selected frequency which, in term, allows a very reliable determination of the frequency and/or phase shift.

In another embodiment, the travel speed is determined depending on a frequency shift between the frequency of the speed determination portion, e.g. the speed determination signal of the transmitted signal and the frequency of the speed determination portion, e.g. the speed determination signal, of the vehicle-reflected signal. Alternatively or in addition, the travel speed is determined depending on a phase shift between the speed determination portion of the transmitted signal and the speed determination portion of the vehicle-reflected signal. This has been explained previously.

In another embodiment, the frequency range is adapted to signal transmission characteristics of the trackside transceiver element. This has been explained previously.

In another embodiment, a malfunction of a trackside system comprising the trackside control unit, the trackside modem unit and the at least one trackside transceiver element is detected if the determined speed value is impossible.

A speed value can be impossible if the determined speed is not within a predetermined interval of possible speed values. In particular, the predetermined interval of speed values can comprise speed values from 0 (inclusive) to a maximum admissible or a maximum possible speed of a rail vehicle today or in the future or to a maximum admissible speed on the respective section of the track. If the detected speed is outside said interval, a malfunction of the trackside system can be detected. The malfunction signal can be transmitted to the interlocking unit. Further, error management measures can be initiated if a malfunction is detected.

A malfunction of the trackside system, in particular of the trackside transceiver element, can alternatively or in addition be detected depending on the vehicle-reflected signal. If the vehicle-reflected signal comprises portions which do not correspond to the data portion, the carrier signal portion or, if applicable, to the speed determination portion, a malfunction of the trackside transceiver can be detected as the malfunction of the trackside transceiver element can generate a new portion of the signal transmitted by the trackside transceiver element.

The invention will be described with reference to the attached figures. The figures show:
- Fig. 1: a schematic diagram of a proposed system and a rail vehicle,
- Fig. 2: another schematic diagram of the proposed system,
- Fig. 3: another diagram of the proposed system and
- Fig. 4: a schematic flow chart of the proposed method.

In the following, the same reference numerals denote the same or similar technical features.

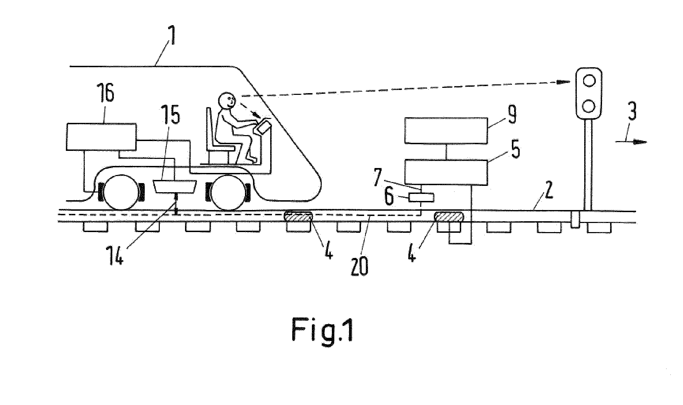

Fig. 1 shows a schematic diagram of the proposed system for determining a travel speed of a rail vehicle 1. The rail vehicle 1 travels on rails 2 in a direction of travel which is indicated by an arrow 3. Further shown are Eurobalises 4 which are installed between the rails 2. The Eurobalises 4 are connected to a lineside electronic unit 5 which provides a trackside control unit.

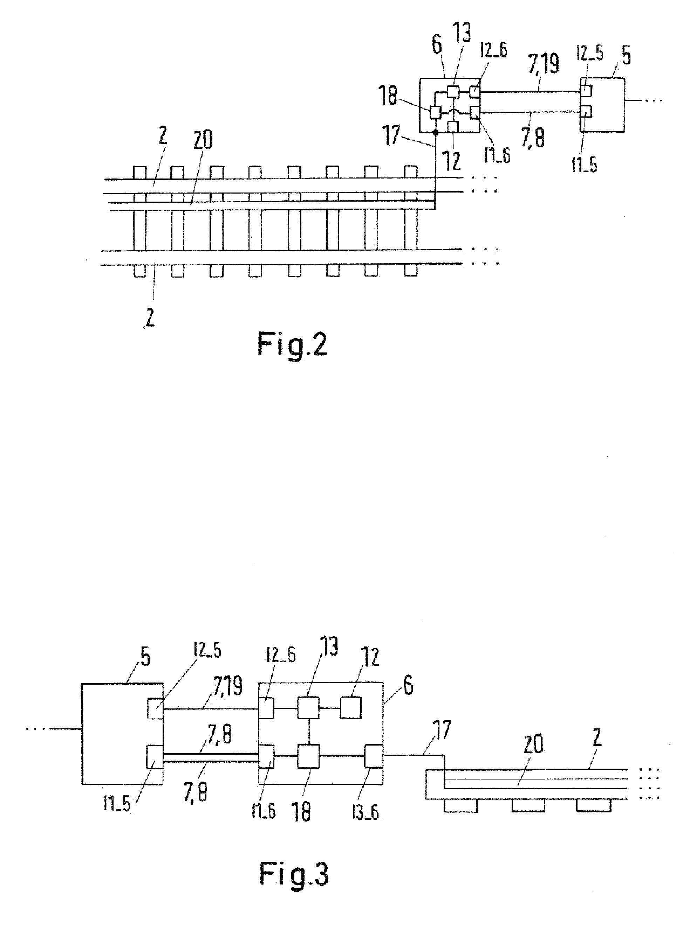

The proposed system comprises said lineside electronic unit 5 which is connected to a loop modem unit 6 by a signal transmission means 7 which can e.g. be provided by a transmission line 8 (see Fig. 2) or even two transmission lines 8 (see e.g. Fig. 3).

The loop modem unit 6 provides a trackside modem unit. Further, the system comprises a Euroloop leaky cable (ELC) 20 which is indicated by a dashed line. The ELC 20 provides a trackside transceiver element and is connected to the loop modem unit 6.

Further shown is an interlocking unit 9 which is connected to the lineside electronic unit 5 by means of a data connection.

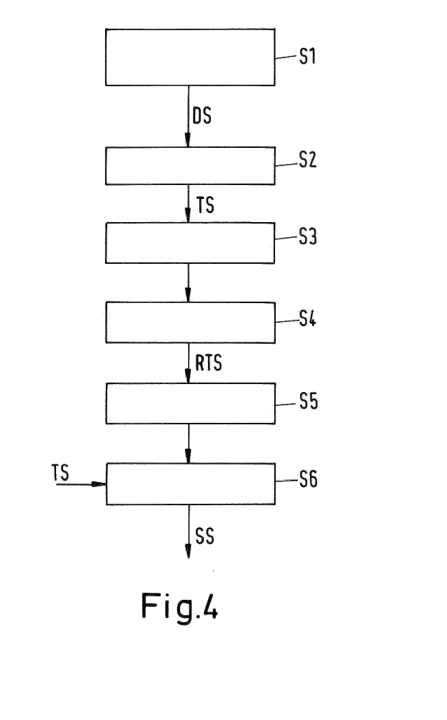

The lineside electronic unit 5 can generate a data signal DS (see Fig. 4), e.g. depending on data provided by the interlocking unit 9. The data signal is transmittable to the loop modem unit 6 via the signal transmission means 7.

Depending on the data signal DS, the loop modem unit 6 can generate a transmission signal TS (see Fig. 4) which is applied to the ELC 20. In particular, the transmission signal TS can comprise a signal carrier portion, a data portion and a speed determination portion. To generate the transmission signal TS, the data portion and the speed determination portion are modulated onto a carrier signal. Depending on the applied signal, the ELC 20 generates a transmitted signal, in particular an electromagnetic field which is transmitted through an air gap 14 between the ELC 20 and a vehicle-sided receiver element 15. The vehicle-sided receiver element 15 is connected to a vehicle-sided control unit 16 for processing the signal received by the vehicle-sided receiver element 15.

At least a portion of said electromagnetic field will be reflected by the rail vehicle 1. This vehicle-reflected signal which can also be referred to as reflected signal or reflected transmitted signal RTS (see Fig. 4), can be received by a trackside receiver element 12 (see Fig. 2). Depending on the travel speed of the rail vehicle 1, a frequency shift between the frequencies of the respective signal portions, namely the signal carrier portion, the data portion and the speed determination portion, of the transmitted signal and the reflected signal will occur.

The receiver element 12 can be integrated into the loop modem unit 6 (see Fig. 2 and 3). Further, an evaluation unit 13 can be integrated into the loop modem unit 6. The receiver element 12 can be connected to the evaluation unit 13 by means of a signal connection.

The evaluation unit 13 can determine the frequency or frequencies of the signal carrier portion, the data portion and the speed determination portion of the vehicle-reflected signal. In this case, the travel speed can be determined depending on the frequency shift between the frequency of the data portion of the transmitted signal and the frequency of the data portion of the reflected signal. Alternatively, the travel speed can be determined depending on a frequency shift between the frequency of the speed determination portion of the transmitted signal and the frequency of the speed determination portion of the vehicle-reflected signal. The frequencies of the respective portions of the transmitted signal which is applied to the ELC 20 can be provided to the evaluation unit 13 by means of a data connection. Further, the evaluation unit 13 can generate a speed signal which represents or encodes the travel speed of the rail vehicle 1.

Fig. 2 shows another schematic diagram of the proposed system. Shown are rails 2 and an ELC 20 which is arranged in between the rails 2. The ELC 20 is connected to the loop modem unit 6 via a jumper cable 17. It is shown that the loop modem unit 6 comprises a signal generation unit 18 which generates the aforementioned transmission signal TS comprising the carrier signal portion, the data signal portion and the speed determination portion. Said signal generation unit 18 is connected to the evaluation unit 13 and to the jumper cable 17 by which the generated transmission signal can be applied to the ELC 20.

Further shown is the lineside electronic unit 5 which comprises a first interface I1_5 by which the transmission means 7 are connected to the lineside electronic unit 5. Further shown is a first interface I1_6 of the loop modem unit 6 by which the loop modem unit 6 can be connected to the transmission means 7, in particular the transmission line 8.

Further shown is a second interface I2_5 of the lineside electronic unit 5 and a second interface I2_6 of the loop modem unit 6 for connecting the respective units 5, 6 to an additional transmission line 19 of the transmission means 7. Via said additional transmission line 19, the speed signal SS (see Fig. 4) generated by the evaluation unit 13 can be transmitted to the lineside electronic unit 5.

Fig. 3 shows another schematic diagram of the proposed system. In most parts, the system shown in Fig. 3 is designed as the system shown in Fig. 2. In contrast to the embodiment shown in Fig. 2, the system shown in Fig. 3 comprises two transmission lines 8 as parts of the transmission means 7 for data transmission between the lineside electronic unit 5 and the loop control unit 6. These two transmission lines 8 can be selected respectively for the transmission of a data signal DS from the lineside electronic unit 5 to the loop modem unit 6. Further shown is that the ELC 20 can be attached to a rail 2, in particular to a side wall of the rail 2.

Further shown is another interface I3_6 for connecting the loop modem unit 6 to the jumper cable 17 which, in turn, is connected to the ELC 20.

Fig. 4 shows a schematic flow chart of the proposed method for determining the travel speed of a rail vehicle 1 (see Fig. 1). In a first step S1, a trackside control unit can generate a data signal DS, wherein in the data signal DS is transmitted to a trackside modem unit, in particular the loop modem unit 6 (see Fig. 1). In a second step S2 the trackside modem unit generates a transmission signal TS based on the data signal DS. In a third step S3, the transmission signal TS is applied to the trackside transceiver element which, as explained previously, generates an alternating electromagnetic field which is transmitted via the air gap 14 to the rail vehicle 1.

In a fourth step S4, a vehicle-reflected transmitted signal RTS is received by at least one trackside receiver element 12. In a fifth step S5, frequencies of the reflected transmitted signal RTS can be determined and assigned to a signal carrier portion, a data portion and a speed determination portion of the reflected transmitted signal RTS.

In a sixth step S6, a frequency or frequencies of the transmission signal TS, which can be equal to the frequency a frequencies of the transmitted signal, in particular of the speed determination portion, can be determined. Further, a frequency shift between the frequency of the speed determination portion of the reflected transmitted signal RTS and the frequency of the speed determination portion of the transmission signal TS can be determined, wherein a speed signal SS or speed data can be generated. The travel speed is determined depending on said frequency shift, e.g. by the evaluation unit 13.

The speed signal SS can be transmitted from the loop modem unit 6 to the lineside electronic unit 5, e.g. via an additional transmission line 19 of the transmission means 7.

## Claims

1. A system for determining the travel speed of a rail vehicle (1), wherein the system comprises a trackside control unit, a trackside modem unit for generating a transmission signal (TS) and at least one trackside transceiver element, wherein a data signal is generable by the trackside control unit and transmittable to the trackside modem unit, wherein the transmission signal (TS) is generable by the trackside modem unit based on the data signal and transmittable to the at least one trackside transceiver element,
**characterized in that**
the system further comprises at least one trackside receiver element (12) for receiving a vehicle-reflected signal, wherein the system further comprises at least one trackside evaluation unit (13) for determining the travel speed depending on at least one signal characteristic of the transmitted signal and at least one signal characteristic of the received vehicle-reflected signal.

2. The system according to claim 1, **characterized in that** the at least one receiver element (12) is integrated into the trackside modem unit.

3. The system according to claim 1 or 2, **characterized in that** the at least one evaluation unit (13) is integrated into the trackside modem unit.

4. The system according to one of the claims 1 to 3, **characterized in that** a signal transmission means (7) for transmitting signals between the trackside control unit and the trackside modem unit comprises at least a first transmission element for transmitting the data signal from the trackside control unit to the trackside modem unit and at least one additional transmission element for transmitting a speed signal from the trackside modem unit to the trackside control unit.

5. The system according to one of the claims 1 to 4, **characterized in that** the travel speed is determined depending on a frequency shift between the frequency of at least one data portion of the transmitted signal and the frequency of at least one data portion of the vehicle-reflected signal and/or depending on a phase shift between the at least one data portion of the transmitted signal and the at least one data portion of the vehicle-reflected signal.

6. The system according to one of the claims 1 to 5, **characterized in that** the transmission signal is generable such that the transmission signal comprises a data portion and a speed determination portion, wherein a frequency of the data portion differs from the frequency of the speed determination portion or wherein a frequency range of frequencies of the data portion differs from a frequency range of frequencies of the speed determination portion.

7. The system according to claim 6, **characterized in that** the travel speed is determined depending on a frequency shift between the frequency of the speed determination portion of the transmitted signal and the frequency of the speed determination portion of the vehicle-reflected signal and/or depending on a phase shift between the speed determination portion of the transmitted signal and the speed determination portion of the vehicle-reflected signal.

8. The system according to one of the claims 6 to 7, **characterized in that** the frequency range of the speed determination portion is adapted to signal transmission characteristics of the trackside transceiver element.

9. A method for determining the travel speed of a rail vehicle (1), wherein a trackside control unit generates a data signal and transmits the data signal to a trackside modem unit, wherein the trackside modem unit generates a transmission signal (TS) based on the data signal and transmits the transmission signal to at least one trackside transceiver element,
**characterized in that**
a vehicle-reflected signal is received by at least one trackside receiver element (12), wherein the travel speed is determined depending on at least one signal characteristic of a transmitted signal and at least one signal characteristic of the received vehicle-reflected signal by at least one trackside evaluation unit (13).

10. The method according to claim 9, **characterized in that** the data signal is transmitted from the trackside control unit to the trackside modem unit by at least a first transmission element of at least one transmission means (7) and a speed signal is transmitted from the trackside modem unit to the trackside control unit by at least one additional transmission element of the transmission means (7).

11. The method according to claim 9 or 10, **characterized in that** the travel speed is determined depending on a frequency shift between the frequency of at least one data portion of the transmitted signal and the frequency of at least one data portion of the vehicle-reflected signal and/or depending on a phase shift between the at least one data portion of the transmitted signal and the at least one data portion of the vehicle-reflected signal.

12. The method according to one of the claims 9 to 11, **characterized in that** the transmission signal (TS) is generated such that the transmission signal (TS) comprises a data portion and a speed determination portion, wherein a frequency of the data portion differs from the frequency of the speed determination portion or wherein a frequency range of frequencies of the data portion differs from a frequency range of frequencies of the speed determination portion.

13. The method according to claim 12, **characterized in that** the travel speed is determined depending on a frequency shift between the frequency of the speed determination portion of the transmitted signal and the frequency of the speed determination portion of the vehicle-reflected signal and/or depending on a phase shift between the speed determination portion of the transmitted signal and the speed determination portion of the vehicle-reflected signal.

14. The method according to one of the claims 12 to 13, **characterized in that** the frequency range of the speed determination portion is adapted to signal transmission characteristics of the trackside transceiver element.

15. The method according to one of the claims 9 to 14, **characterized in that** a malfunction of a trackside system comprising the trackside control unit, the trackside modem unit and the least one trackside transceiver element is detected if the determined speed is impossible and/or depending on the vehicle-reflected signal.
